# EUROPEAN PATENT APPLICATION

(11) **EP 2 629 476 A1**
(43) Date of publication of application: **21.08.2013**
(21) Application number: 12176216.5
(22) Date of filing: 12.07.2012
(51) Int. Cl.: H04L 29/06

(54) **Adaptive display streams**

(30) Priority: 20.02.2012 CN 201210039852
(71) Applicant: ViXS Systems Inc., Toronto, ON M2K 1E3 (CA)
(72) Inventor: Dong, SuiWu, Markham, Ontario L3R 4R6 (CA); Jin, Song, Richmond Hill, Ontario L4E 4J9 (CA)
(74) Representative: Harrison Goddard Foote LLP

(57) **Abstract**

A transcoding device receives an input stream representing media information designated for display at a sink device. The transcoding device generates multiple display streams based on the input stream, wherein each of the display streams has a different transmission characteristic, such as a different bit rate or resolution. The transcoding device selects one of the generated display streams based on a network characteristic, such as a bandwidth or latency, and communicates the selected stream to the network for transmission to the sink device. In response to a change in the network characteristic, a different one of the generated display streams is selected and communicated to the network for transmission to the sink device.

## Description

### FIELD OF THE DISCLOSURE

The present invention relates generally to data communication, and more particularly to communication of display streams.

### BACKGROUND

Video information is typically encoded prior to communication of the information over a network. The video information can be encoded in any one of a number of different formats, depending on the device that generates or stores the video information. In order to allow the video information to be processed by a video sink device, such as a display device, a transcoder device can be employed to translate the encoded video to a format that is understood by the display device.

### BRIEF DESCRIPTION OF THE DRAWINGS

FIG. 1 is a block diagram a server system for communication of display streams in accordance with one embodiment of the present disclosure.

FIG. 2 is a block diagram illustrating communication of display streams with the server system of FIG. 1 in accordance with one embodiment of the present disclosure.

FIG. 3 is a block diagram illustrating communication of display streams with the server system of FIG. 1 in accordance with another embodiment of the present disclosure.

FIG. 4 is a block diagram illustrating components of the server of FIG. 1 in accordance with one embodiment of the present disclosure.

FIG. 5 is a flow diagram illustrating a method of communicating display streams in accordance with one embodiment of the present disclosure.

### SUMMARY OF THE INVENTION

According to aspects of the present invention there is provided apparatus and methods as set forth in the appended claims.

According to an aspect of the invention there is provided a method comprising generating a plurality of concurrent display streams based on an input stream, each of the plurality of concurrent display streams associated with a different transmission characteristic; selecting a first of the plurality of concurrent display streams for communication to a network at a first time; in response to detecting a first change in a characteristic of the network, selecting a second of the plurality of concurrent display streams for communication to the network at a second time.

The transmission characteristic may be a bitrate.

The method may further comprise in response to detecting a second change in a characteristic of the network, selecting the first of the plurality of concurrent display streams for communication to the network at a third time.

### DETAILED DESCRIPTION OF THE FIGURES

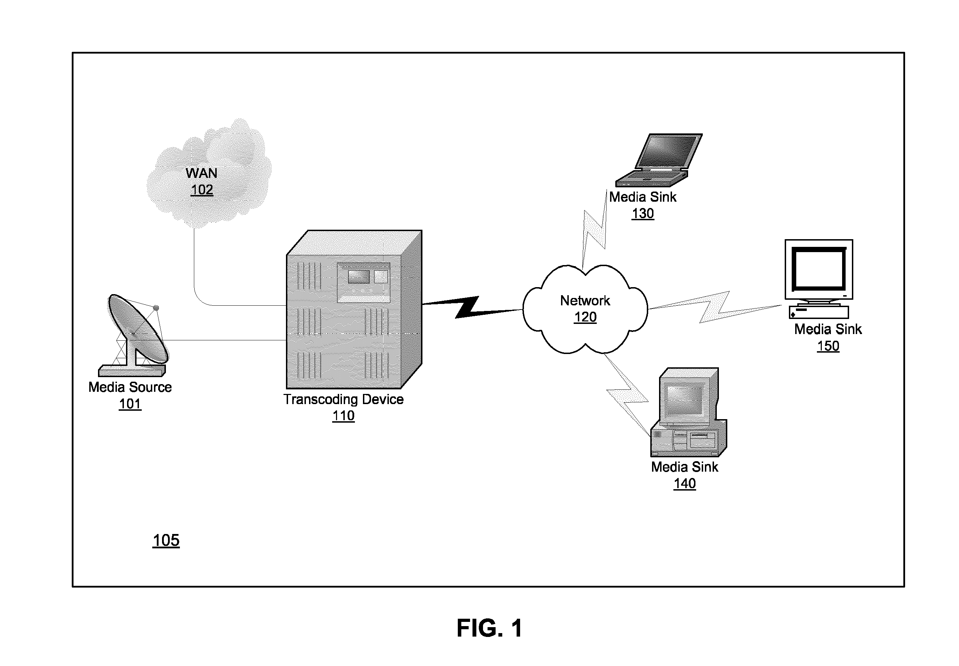

FIGS. 1-5 illustrate techniques for communicating display streams to a network. A transcoding device receives an input stream representing video, audio, or other media information, or a combination thereof, designated for display at a sink device. The transcoding device generates multiple display streams based on the input stream, wherein each of the display streams has a different transmission characteristic, such as a different bit rate or resolution. The generated display streams can include video information, audio information, or other multimedia information, or a combination thereof. The transcoding device selects one of the generated display streams based on a network characteristic, such as a bandwidth or latency, and communicates the selected stream to the network for transmission to the sink device. In response to a change in the network characteristic, a different one of the generated display streams is selected and communicated to the network for transmission to the sink device. Accordingly, different generated display streams can be communicated to the sink device in response to changes in network conditions. This allows the transcoding device to adapt to changing network conditions while reducing the likelihood that the adaptation will inhibit display of the media information at the sink device.

To illustrate, in one embodiment the transcoding device can concurrently generate three different display streams, designated for purposes of discussion as stream A, stream B, and stream C. Each of the display streams has a different bitrate, with stream A having the highest bitrate, stream B the next highest bitrate, and stream C the lowest bitrate. The transcoding device can determine that the bandwidth of the network is above a defined threshold and, in response, communicate stream A to the network for transmission to the sink device. The transcoding device continues to generate stream B and stream C as stream A is communicated to the network. In response to determining that the network bandwidth is below the defined threshold, the transcoding device stops communicating stream A to the network, selects stream B, and communicates stream B to the network for transmission to the sink device. As network conditions continue to change, the transcoding device can continue to switch among the streams. For example, if the bandwidth increases above the threshold, the transcoding device can return to communicating stream A. If the bandwidth falls further below the threshold, the transcoding device can switch to communicating stream C. Further, the transcoding device can synchronize switching between the streams so that a user viewing the media information at the sink device does not experience lag, skipping, or other distracting effects.

Referring FIG. 1, a communication network 105 is illustrated in accordance with one embodiment of the present disclosure. The communication network 105 includes a media source 101, a wide area network 102, a transcoding device 110, a network 120, and media sinks 130, 140, and 150. The media source 101 is a set of devices and communication fabric that generates or provides video, audio, and multimedia data for communication and display. Accordingly the media source 101 1 can be a satellite or cable television source, a broadcast television source, a collection of one or more multimedia servers, a DVD player, and the like, or any combination thereof. The media data can be television programming, recorded or stored video, movies, video clips, and the like, or any combination thereof.

The wide area network (WAN) 102 is a communication network generally configured to provide data generated or stored at devices in the WAN 102. In one embodiment, the WAN 102 is the Internet. The media data provided by the WAN 102 can be television programming, recorded or stored video, movies, video clips, and the like, or any combination thereof, and can include video information, audio information, and other multimedia information.

Both the WAN 102 and the media source 101 can provide media data in accordance with one or more defined formats, such as a format in compliance with a Motion Picture Experts Group (MPEG) standard. Accordingly, the media data can be provided in a stream format, whereby the stream includes the media data in compressed form. A stream of media data (which can include video data, audio data, or other multimedia data, or a combination thereof) targeted for display, or targeted for storage and subsequent display, is referred to herein as a display stream. Each display stream is associated with a bitrate, which is the number of bits of information communicated by the display stream per defined time unit (e.g. per second).

The transcoding device 110 is a device generally configured to receive an input stream and transcode the input stream to produce a plurality of display streams. Accordingly, the transcoding device 110 can be incorporated in or be a portion of any of a number of media devices, including a set top box, DVD or other media player, computer server or other computer device, cell phone or other telecommunication device, and the like. In an embodiment, the transcoding device 110 transcodes the input streams by changing an encoding format of the received streams and by changing the data rate (referred to herein as transrating) the received streams. In another embodiment the transcoding device 110 maintains the encoding format of the received streams but transrates the streams.

As described further herein, the transcoding device 110 is configured to concurrently generate multiple display streams for a selected input stream, such that each of the generated display streams has different transmission characteristics. As used herein, a transmission characteristic refers to a feature of a display stream that affects the speed with which the display stream can be communicated by a given network. Examples of transmission characteristics include the data rate of a display stream, the resolution of media data associated with the display stream, and the like. Thus, in one embodiment the transcoding device 110 can generate, based on a particular received display stream, multiple display streams where each of the generated display streams has a different bitrate. In another embodiment each of the generated display streams can have a different resolution. For example, one of the generated display streams can be associated with high definition (HD) video information while another of the generated display streams can be associated with standard definition (SD) video information. In still another embodiment, the transmissible display streams can vary across multiple transmission characteristic types. Thus, each of the generated display streams can have different bit rates and have different resolutions. Further, although each of the generated display streams has different transmission characteristics, each represents the same media data as provided by the input stream. Thus, for example, if the input stream represents a particular television program, each of the generated display streams will represent that same television program.

The network 120 is a communication network generally configured to provide a communication backbone for communication of display streams and other information. Accordingly, the network 120 can be a local area network, a wide area network, and the like. The media sinks 130, 140, and 150 each represent a different device generally configured to receive display streams, to translate the received display stream to a format suitable for rendering at a display device, and to display the rendered data at the display device. Accordingly, the media sinks 130, 140, and 150 can each be a computer device, television device, set top box, cell phone or other telecommunication device, and the like, or a combination thereof.

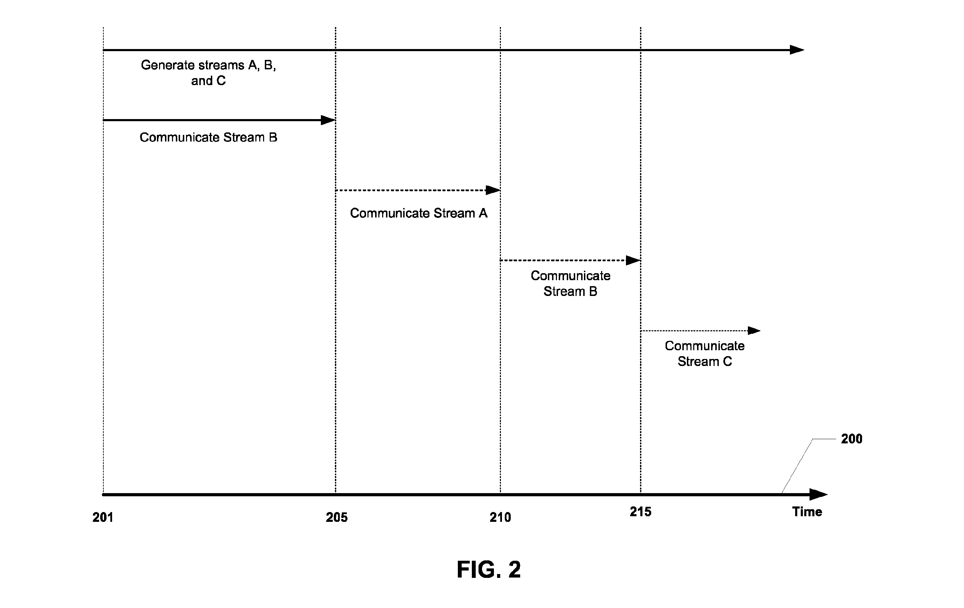

In operation, at least one of the content sinks 130, 140, or 150 can request, via the network 120, media information from one of media source 101 and wide area network 101. In response, the requested media data, encoded in a display stream, is provided to the transcoding device 110. In response, the transcoding device 110 generates multiple display streams based on the received input stream, with each of the generated display streams having different transmission characteristics. The transcoding device 110 selects among the generated display streams based upon one or more detected characteristics of the network 120, and communicates the selected display stream to the network 120 for transmission to the sink that requested the media information. Further, the transcoding device 110 can dynamically switch between the generated display streams in response to changes in the characteristics of the network 120. This can be better understood with reference to FIG. 2.

FIG. 2 illustrates a timeline 200 depicting selection and communication of generated display streams in accordance with one embodiment of the present disclosure. At time 201, the transcoding device receives a display stream from media source 101 and, in response, generates display streams A, B, and C, each representing the media data of the received input stream, and each having a different transmission characteristic. For purposes of illustration, it is assumed that display streams A, B, and C each have different bit rate, with stream A having the highest bitrate, stream B the next highest bitrate, and stream C the lowest bitrate.

At time 201 the transcoding device 110 determines a network characteristic of the network 120. For purposes of illustration, it is assumed that the network characteristic is a bandwidth of the network 120. In other embodiments, the network characteristic can be communication latency, a quality of service, and the like. At time 201 the transcoding device 110 determines that the network bandwidth falls within a defined range, such that bitrate associated with stream B is predicted to provide the best user experience. To illustrate, the range can be defined such that, if stream A were to be selected when the bandwidth is within the range, the user would experience lag, stuttering, or other undesirable artifacts when viewing the media information. Further, if stream C were to be selected, the user would experience an undesirable delay in commencement of media playback without a commensurate increase in quality of the playback relative to stream B. Accordingly, the transcoder 110 selects stream B and communicates stream B to network 120 between time 201 and time 205.

At time 205 the transcoder 110 determines that the network bandwidth has increased, such that the bandwidth is above the range associated with stream B. In response, the transcoder 110 selects stream A, stops communication of stream B to the network 120, and begins communication of stream A to the network 120. The change from communication of stream B to communication of stream A is synchronized so that the user does not experience skipping or other undesirable artifacts of the switch.

For example, in one embodiment each of the streams A, B, and C are composed of segments, such as packets, whereby each segment includes one or more frames of media information. Further, each segment and include a header or other identifying information that includes a time stamp associated with the media information. Accordingly, each of the streams A, B, and C are generated such that a common timestamp between the streams is associated with the same media information. Therefore, in response to determining that the stream being communicated is to be changed, the transcoder 110 can determine the timestamp of the last segment of the selected stream that was communicated to the network 120, locate the segment of the next stream to be communicated that has the same timestamp (or the next timestamp in sequence), and begin communication of the stream with the selected segment.

For example, the transcoder 110 can determine, in switching from stream A to stream B, that the last segment of stream A that was communicated to the network 120 was associated with timestamp value 00100. The transcoder 110 can locate the segment of stream B that has timestamp value 00100, or the segment of stream B that has the timestamp value next in sequence (e.g. 00101), and begin communication of stream B with the selected segment.

In another embodiment, the transcoder 110 can synchronize the change in streams based on the timing associated with communication of selected control information. For example, for some encoding formats a control header is periodically included in the stream. The control header can include, for example, information about the bit rate, resolution, or other characteristics of the stream. Accordingly the transcoder 110 can synchronize the change in streams such that the first segment communicated by the newly-selected stream is a segment that includes the control header. This reduces the likelihood that the change in streams will result in decoding errors or other errors at the sink device.

Returning to FIG. 2, at time 210 the transcoder 110 determines that the network bandwidth has decreased, such that the bandwidth is within the range associated with stream B. In response, the transcoder 110 selects stream B, stops communication of stream A to the network 120, and begins communication of stream B to the network 120. At time 215, the transcoder 110 determines that the network bandwidth has decreased, such that the bandwidth is below the range associated with stream B. In response, the transcoder 110 selects stream C, stops communication of stream B to the network 120, and begins communication of stream C to the network 120.

In the illustrated example of FIG. 2, while communicating any one of the streams A, B, and C to the network 120, the transcoder 110 continues to concurrently generate all three of streams A, B, and C. This provides for a quicker transition between the streams in response to a change in network conditions, and reduces the likelihood that the user will experience stutter or other undesirable artifacts. For the two streams that are being generated but not communicated, the generated streams can be buffered so that the streams are available in the event of a change in the network characteristic.

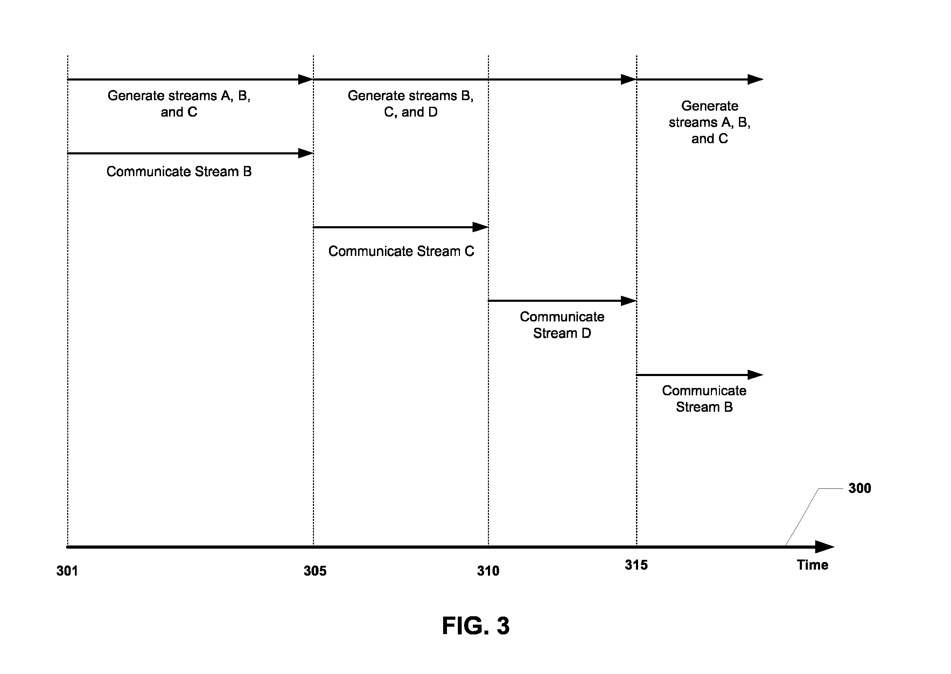

In another embodiment, the transcoder 110 can generate different sets of streams depending upon the network characteristics. This can be better understood with reference to FIG. 3, which illustrates selection and communication of generated display streams in accordance with one embodiment of the present disclosure. At time 301, the transcoding device receives a display stream from media source 101 1 and, in response, generates display streams A, B, and C, each representing the media data of the received input stream, and each having a different bit rates, with the media data carried by each stream having the same resolution. For purposes of illustration, it is assumed that stream A has the highest bitrate, stream B the next highest bitrate, and stream C the lowest bitrate.

At time 301 the transcoding device 110 determines a bandwidth of the network 120. At time 301 the transcoding device 110 determines that the network bandwidth falls within a defined range associated with stream B. Accordingly, the transcoder 110 selects stream B and communicates stream B to network 120 between time 301 and time 305.

At time 305 the transcoder 110 determines that the network bandwidth has decreased, such that the bandwidth is below the range associated with stream B. In response, the transcoder 110 selects stream C, stops communication of stream C to the network 120, and begins communication of stream C to the network 120. The change from communication of stream B to communication of stream C is synchronized so that the user does not experience skipping or other undesirable artifacts of the switch.

In addition, in response to the decrease in network bandwidth, the transcoder 110 stops generation of stream A, and begins generation of stream D, so that transcoder 110 concurrently generates streams B, C, and D. In one embodiment, stream D has a lower bit rate than stream C. In another embodiment, stream D has the same bit rate as stream C, but the media data associated with stream D has a lower resolution than the resolution associated with stream C. In still another embodiment, stream D can have both a lower bit rate and lower resolution relative to stream C.

At time 310 the transcoder 110 determines that the network bandwidth has decreased, such that the bandwidth is below a range associated with stream C. In response, the transcoder 110 selects stream D, stops communication of stream C to the network 120, and begins communication of stream D to the network 120. Thus, by beginning generation of stream D at time 305, prior to the reduction in bandwidth at time 310, the transcoder 110 is able to switch to stream D more quickly than if it began generation of stream D at time 310. This can reduce latency, transmission errors, or other difficulties arising from the reduction in network bandwidth.

At time 315, the transcoder 110 determines that the network bandwidth has increased, such that the bandwidth is within the range associated with stream B. In response, the transcoder 110 selects stream B, stops communication of stream D to the network 120, and begins communication of stream B to the network 120. In addition, the transcoder 110 stops generation of stream D and returns to generation of stream A, such that the transcoder is prepared to switch to stream A if the network bandwidth further increases.

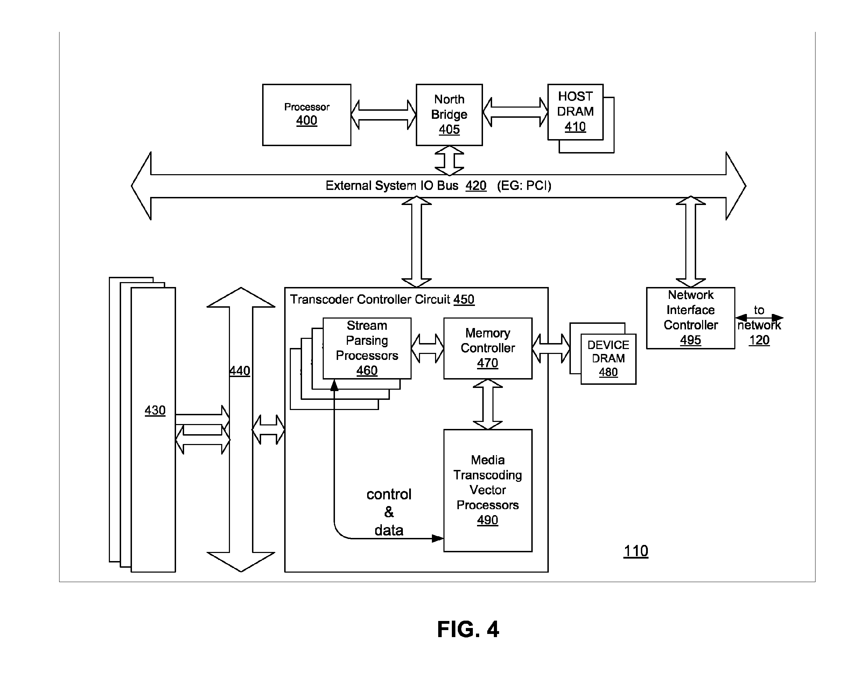

Referring to FIG. 4, transcoding device 110 is illustrated in greater detail according to at least one embodiment of the present invention. Received display streams enter the system via digital tuner demultiplexors (DEMUX) 430, from which the appropriate streams are sent to transcoder controller circuit 450. Transcoder controller circuit 450, in one embodiment, includes one or more stream parsing processors 460 that perform the higher level tasks of digital media decoding, such as video decoding. Stream parsing processors 460 drive a series of media transcoding vector processors 490 that perform the low level media transcoding tasks. The stream parsing processors 460 and media vector transcoder processors 490 are configured to generate multiple display streams for a selected input stream, with each of the generated streams having different transmission characteristics. The generated streams are stored in the device memory, such as dynamic random access memory (DRAM) 480.

The processor 400 is configured to detect network characteristics of the network 120. In one embodiment, the processor 400 determines the network characteristics, such as bandwidth, based on feedback data received from the network interface controller 495. For example, the network interface controller 495 can include one or more measurement devices to determine the network bandwidth, latency, and other network characteristics. Based on the detected network characteristics, the processor 400 can designate one of the stored generated streams for communication to the network 120. In response, the selected stream is transmitted according to a direct memory access (DMA) method via external system input/output (IO) bus 420 past north bridge 405 into the host memory (host DRAM 310). Processor 400, using a timer driven dispatcher, at an appropriate time, will route the selected stream stored in host DRAM 410 to network interface controller 495, which then routes the stream to the network 120.

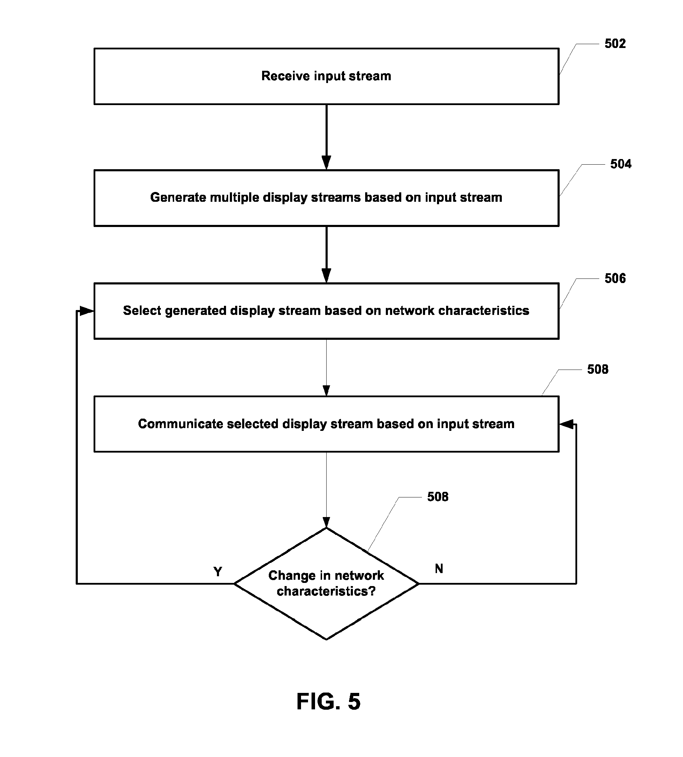

FIG. 5 illustrates a flow diagram of a method of communicating display streams to a network in accordance with one embodiment of the present disclosure. At block 502 the transcoder 110 receives an input stream including media information. At block 504 the transcoder 110 generates multiple display streams based on the input stream. Each of the generated display streams includes the media information of the input stream, but has different transmission characteristics. At block 506 the transcoder 110 determines one or more characteristics of the network 120 and selects one of the generated display streams based on the network characteristics. At block 508 the transcoder 110 communicates the selected stream to the network. At block 510 the transcoder 110 determines if there has been a change in the network characteristics. If not, the method flow returns to block 508 and the transcoder 110 continues to communicate the previously selected display stream to the network 120. If the network characteristics have changed, the method flow returns to block 506 and the transcoder 110 selects another of the generated display streams for communication to the network 120.

One implementation of the invention is as sets of computer readable instructions resident in the random access memory of one or more processing systems configured generally as described in FIGS. 1-5. Until required by the processing system, the set of instructions may be stored in another computer readable memory, for example, in a hard disk drive or in a removable memory such as an optical disk for eventual use in a CD drive or DVD drive or a floppy disk for eventual use in a floppy disk drive. Further, the set of instructions can be stored in the memory of another image processing system and transmitted over a local area network or a wide area network, such as the Internet, where the transmitted signal could be a signal propagated through a medium such as an ISDN line, or the signal may be propagated through an air medium and received by a local satellite to be transferred to the processing system. Such a signal may be a composite signal comprising a carrier signal, and contained within the carrier signal is the desired information containing at least one computer program instruction implementing the invention, and may be downloaded as such when desired by the user. One skilled in the art would appreciate that the physical storage and/or transfer of the sets of instructions physically changes the medium upon which it is stored electrically, magnetically, or chemically so that the medium carries computer readable information.

In the preceding detailed description of the figures, reference has been made to the accompanying drawings which form a part thereof, and in which is shown by way of illustration specific preferred embodiments in which the invention may be practiced. These embodiments are described in sufficient detail to enable those skilled in the art to practice the invention, and it is to be understood that other embodiments may be utilized and that logical, mechanical, chemical and electrical changes may be made without departing from the spirit or scope of the invention. To avoid detail not necessary to enable those skilled in the art to practice the invention, the description may omit certain information known to those skilled in the art. Furthermore, many other varied embodiments that incorporate the teachings of the invention may be easily constructed by those skilled in the art. Accordingly, the present invention is not intended to be limited to the specific form set forth herein, but on the contrary, it is intended to cover such alternatives, modifications, and equivalents, as can be reasonably included within the spirit and scope of the invention. The preceding detailed description is, therefore, not to be taken in a limiting sense, and the scope of the present invention is defined only by the appended claims.

## Claims

1. A method comprising:
transcoding (504) an input stream to generate a plurality of concurrent display
streams, each of the plurality of concurrent display streams having a different transmission characteristic;
selecting (506) a first display stream of the plurality of concurrent display streams
based on a first characteristic of a network; and
in response to selecting the first display stream, communicating (508) the first display
stream to the network.

2. The method of claim 1, further comprising:
while communicating (508) the first display stream to the network, determining (510)
a first change in the first characteristic of the network;
in response to determining the first change, communicating a second display stream
of the plurality of concurrent display streams to the network.

3. The method of claim 2, further comprising:
while communicating the second display stream to the network, determining (510) a
second change in the first characteristic of the network;
in response to determining the second change, communicating a third display stream
of the plurality of transmissible display streams to the network.

4. The method of claim 2 or 3, further comprising stopping generation of the first display stream in response to the first change in the first characteristic of the network.

5. The method of claim 2, 3 or 4, further comprising starting generation of a third display stream in response to the first change in the first characteristic of the network; optionally the method of further comprising stopping generation of the third display stream in response to a second change in the first characteristic of the network; optionally the method of further comprising resuming generation of the first display stream in response to the second change in the first characteristic of the network.

6. The method of any of claims 2 to 5, wherein the first display stream has a first bitrate and the second display stream has a second bitrate different than the first bitrate.

7. The method of any of claims 2 to 6, wherein the first display stream is a high definition display stream and the second display stream is a standard definition display stream.

8. The method of any of claims 2 to 7, wherein the first display stream has a first resolution and the second display stream has a second resolution different from the first resolution.

9. The method of any of claims 2 to 8, wherein communicating the second display stream comprises synchronizing the first display stream and the second display stream based on a timestamp associated with the first display stream.

10. The method of any preceding claim, wherein the network characteristic comprises a network bandwidth.

11. A device, comprising:
an input (430) to receive an input stream representing media information;
a transcoding module (450) to transcode the input stream to generate a plurality of
concurrent display streams, each of the plurality of concurrent display streams having a different transmission characteristic; and
a selection module (400) to select a first display stream of the plurality of concurrent
display streams based on a first characteristic of a network and to communicate the first display stream to the network.

12. The device of claim 11, the selection module (400) further to:
while communicating the first display stream to the network, determine a first change
in the first characteristic of the network; and
in response to determining the first change, communicate a second display stream of
the plurality of concurrent display streams to the network.

13. The device of claim 11 or 12, the selection module (400) further to:
while communicating the second display stream to the network, determine a second
change in the first characteristic of the network; and
in response to determining the second change, communicate a third display stream of
the plurality of transmissible display streams to the network.

14. The device of claim 11, 12 or 13, the transcoding module (450) further to stopping generation of the first display stream in response to the first change in the first characteristic of the network.

15. The device of any of claims 11 to 14, transcoding module (450) further to start generation of a third display stream in response to the first change in the first characteristic of the network.
